# EUROPEAN PATENT APPLICATION

(11) **EP 3 552 802 A1**
(43) Date of publication of application: **16.10.2019**
(21) Application number: 18167378.1
(22) Date of filing: 13.04.2018
(51) Int. Cl.: B29C 64/153, B33Y 10/00, B29C 64/393, B33Y 50/02

(54) **METHOD FOR OPERATING AT LEAST ONE APPARATUS FOR ADDITIVELY MANUFACTURING THREE-DIMENSIONAL OBJECTS**

(71) Applicant: CL Schutzrechtsverwaltungs GmbH, 96215 Lichtenfels (DE)
(72) Inventor: Brüschke, Stefan, 90425 Nürnberg (DE); Werner, Jürgen, 96215 Lichtenfels (DE); Voigt, Timo, 91054 Erlangen (DE)
(74) Representative: Hafner & Kohl

(57) **Abstract**

Method for operating at least one apparatus (1) for additively manufacturing three-dimensional objects (2) by means of successive layerwise selective irradiation and consolidation of layers of a build material (3) which can be consolidated by means of at least one energy beam (4), wherein the energy beam (4) can be guided along at least one defined beam path (9) arranged in a build plane (6) to irradiate build material (3), wherein dependent on at least one parameter relating to a length of the at least one defined beam path (9) and/or relating to a geometry of at least one region (10, 13) of at least one layer to be irradiated, the energy beam (4) is guided along the defined beam path (9) or along a substitute beam path (12).

## Description

The invention relates to a method for operating at least one apparatus for additively manufacturing three-dimensional objects by means of successive layerwise selective irradiation and consolidation of layers of a build material which can be consolidated by means of at least one energy beam, wherein the energy beam can be guided along at least one defined beam path arranged in a build plane to irradiate build material.

Apparatuses for additively manufacturing three-dimensional objects and methods for operating the same are generally known from prior art. Typically, an energy source, such as a laser beam or an electron beam is used to selectively irradiate and thereby consolidate layers of a build material. Due to the layerwise selective irradiation and consolidation of several layers, the three-dimensional object is successively built.

Further, it is known that the irradiation of single layers that have to be selectively irradiated or at least one region of such a layer that has to be irradiated, is typically based on object data of three-dimensional object. In other words, the object that is manufactured in the additive manufacturing process defines the regions of each layer of build material that has to be irradiated. In some of those regions, for example dependent on the shape, an energy beam path may be defined ("defined beam path") along which the energy beam is guided to irradiate the build material. The energy beam may preferably be guided along a defined path that allows reducing thermal stress in the three-dimensional object and positively influences the consolidation behavior of the build material.

In some regions the definition of the defined beam path is difficult, for example regarding fine structures or filigree parts of a three-dimensional object, as the regions to be irradiated may become comparatively small or the defined beam paths may become comparatively short. Thus, the definition of the defined the beam path may be difficult or may lead to beam paths that are too short to be irradiated properly.

It is an object of the present invention to provide a method for operating at least one apparatus for additively manufacturing three-dimensional objects, wherein the irradiation of fine structures and/or filigree parts is improved.

The object is inventively achieved by a method according to claim 1. Advantageous embodiments of the invention are subject to the dependent claims.

The method described herein is a method for operating an apparatus for additively manufacturing three-dimensional objects, e.g. technical components, by means of successive selective layerwise consolidation of layers of a powdered build material ("build material") which can be consolidated by means of an energy source, e.g. an energy beam, in particular a laser beam or an electron beam. A respective build material can be a metal, ceramic or polymer powder. A respective energy beam can be a laser beam or an electron beam. A respective apparatus can be a selective laser sintering apparatus, a selective laser melting apparatus or a selective electron beam melting apparatus, for instance.

The apparatus may comprise a number of functional units which are used during its operation. Exemplary functional units are a process chamber, an irradiation device which is adapted to selectively irradiate a build material layer disposed in the process chamber with at least one energy beam, and a stream generating device which is adapted to generate a gaseous fluid stream at least partly streaming through the process chamber with given streaming properties, e.g. a given streaming profile, streaming velocity, etc. The gaseous fluid stream is capable of being charged with non-consolidated particulate build material, particularly smoke or smoke residues generated during operation of the apparatus, while streaming through the process chamber. The gaseous fluid stream is typically inert, i.e. typically a stream of an inert gas, e.g. argon, nitrogen, carbon dioxide, etc.

As described before, the invention relates to a method for operating at least one apparatus for additively manufacturing three-dimensional objects, wherein an energy beam can be guided in a build plane (in which a surface of build material is arranged to be irradiated) to irradiate build material. The invention is based on the idea that dependent on at least one parameter relating to a length of the at least one defined beam path and/or relating to a geometry of at least one region of at least one layer to be irradiated, the energy beam is guided along the defined beam path or along a substitute beam path. According to the invention, it is possible that the energy beam is not guided along the defined beam path but the energy beam may be guided along a substitute beam path. The decision whether the energy beam is guided along the defined beam path or along the substitute beam path depends on the at least one parameter.

The at least one parameter relates to a length of the at least one defined beam path and/or to a geometry of at least one region of at least one layer to be irradiated. Thus, dependent on the parameter, for example dependent on the length of the at least one defined beam path, the energy beam may be guided along the defined beam path or along the substitute beam path. For example, the geometry of at least one region of at least one layer that has to be irradiated during the additive manufacturing process, may comprise structures or filigree regions in that the length of the defined beam path the energy beam would be guided along to irradiate said regions comprises a defined length, wherein the object quality and/or process quality, in particular the consolidation behavior of the build material, could be influenced by guiding the energy beam along the defined beam path. Hence, the energy beam may be guided along the substitute beam path, wherein the same region is irradiated as irradiating along the defined beam path, but another path is used, namely the substitute beam path. Thus, the substitute beam path differs from the defined beam path but the same region is irradiated by guiding the energy beam along the substitute beam path.

The beam path may also be understood as irradiation vector, (part of an) irradiation pattern or scan path. The defined beam path may be defined dependent on object data, for example by (uniformly) dividing the area that has to be irradiated into defined beam paths the energy beam has to be guided along to irradiate the build material in the respective area.

For example, in regions in which the defined beam path would be too short, in particular regarding filigree parts or fine structures of the three-dimensional object, the substitute beam path can be used instead of the defined beam path, wherein the substitute beam path can be arranged relative to the region that has to be irradiated other than the defined beam path to allow for an improved irradiation of the build material. Thus, instead of having multiple shorter defined beam paths, less substitute beam paths can be used, as will be described below.

According to a first embodiment of the present invention, dependent on a beam path length of at least two adjacent defined beam paths, the at least one energy beam may be guided along the at least two adjacent defined beam paths or the energy beam may be guided along a substitute beam path, wherein the at least two adjacent defined beam paths and the substitute beam path are assigned to the same section of the build plane. Hence, instead of irradiating said section with the energy beam being guided along the at least two adjacent defined beam paths, the energy beam may be guided along the substitute beam path that is assigned to the same section of build material arranged in the build plane.

In particular, by guiding the energy beam along the substitute beam path the same section of build material is irradiated as it would be irradiated, if the energy beam would be guided along the at least two adjacent defined beam paths. As the substitute beam path may be arranged more advantageous with respect to the region or the section, the irradiation of the build material arranged in the section is improved. For example, instead of irradiating two short adjacent beam paths, one comparatively longer substitute beam path may be irradiated.

Further, the energy beam may be guided along the substitute beam path, if the beam path lengths of the at least two adjacent defined beam paths falls below or matches a defined beam path length. According to this embodiment, a particular defined beam path length may be defined, such as a threshold value for the defined beam path length. If the beam path lengths of the at least two adjacent defined beam paths match this threshold value or the beam path lengths fall below this threshold value, the substitute beam path may be used instead of the defined beam paths.

Hence it is possible to decide whether or not to use the defined beam path, as it is defined for example via a control unit that receives the object data, in particular slice data and generates the defined beam paths, or the substitute beam path based on the length of the at least two adjacent defined beam paths. In particular, if the beam path lengths of the at least two adjacent defined beam paths are too short (compared to a threshold value), the substitute beam path can be used, i.e. the energy beam may be guided along the substitute beam path.

The substitute beam path may extend through a defined point, in particular the center, of the at least two adjacent defined beam paths. As described before, the region to which the at least two adjacent defined beam paths are assigned is the same region for the corresponding substitute beam path that is used as a substitute for the two adjacent defined beam paths. As the same region of the build plane is covered by the irradiation via the energy beam guided along the substitute beam path as it would to be covered, if the irradiation would be performed based on the two adjacent defined beam paths, the substitute beam path has to a defined degree extend through the at least two adjacent defined beam paths. Therefore, the substitute beam path may extend through the defined point, preferably the center of each of the at least two adjacent defined beam paths.

It is particularly preferred that the defined beam path length of the at least two adjacent defined beam paths (threshold value, as described before) is chosen with respect to the spot size of the energy beam that is used in the additive manufacturing process. Hence, if the beam path length of the at least two adjacent defined beam paths is shorter or matches the spot size, the substitute beam path can be used in that the energy beam may be guided along the substitute beam path connecting the at least two adjacent defined beam paths. By defining the substitute beam path as extending through the centers of each of the at least two adjacent defined beam paths, the respective region the at least two adjacent defined beam paths are assigned to, will be irradiated properly by guiding the energy beam along the substitute beam path.

According to another embodiment of the inventive method, the at least two adjacent defined beam paths are at least partially arranged in parallel. Thus, the region which the at least two adjacent defined beam paths are assigned to may be subdivided into the at least two adjacent defined beam paths or the at least two adjacent defined beam paths may be distributed over the region to allow for the energy beam to be guided along the at least two adjacent defined beam paths to irradiate the whole region. For example, the region may be covered by the at least two adjacent defined beam paths being arranged in parallel. Thus, the substitute beam path may extend through the at least two adjacent defined beam paths that were arranged in parallel.

At least one defined beam path and the substitute beam path may enclose a defined angle. As described before, the energy beam that is guided along the substitute beam path may be guided in the same region of the build plane that an energy beam would be guided along, if it was guided along the corresponding defined beam path. Hence, the direction of the substitute beam path will differ from the at least one defined beam path, in particular differ by the angle that is enclosed between the substitute beam path and the at least one defined beam path. In particular, the substitute beam path may extend through one or more defined beam paths, wherein between the substitute beam path and each of the defined beam paths an angle may be enclosed, preferably the same angle as the defined beam paths may be arranged in parallel. The angle that is in enclosed between the substitute beam path and the at least one defined beam path depends on the orientation of the defined beam path with respect to the region that has to be irradiated.

The defined beam path length (threshold value, as described before) may be defined dependent on a physical and/or chemical parameter of the build material and/or an object parameter of the object to be built. Defining the defined beam path length dependent on a physical and/or a chemical parameter of the build material and/or an object parameter of the object to be built, it is possible to take various process conditions of the additive manufacturing process into calculation. For example, it can be considered which build material is used and/or the consolidation behavior can be influenced. It is also possible to consider the object, in particular object parameters, such as geometry parameters of the object to be built.

According to another embodiment of the inventive method, the defined beam path length is defined dependent on at least one process parameter relating to the manufacturing process, in particular relating to the irradiation of build material, preferably the power and/or the intensity of the energy beam and/or a scan speed of the energy beam and/or the spot size of the energy beam. Hence, the defined beam path length may be defined dependent on at least one process parameter that relates to the additive manufacturing process that is performed on the inventive apparatus. This allows for adjusting the defined beam path length dependent on various process parameters, such as process parameters relating to the irradiation of build material, in particular parameters of the energy beam, such as the power and/or the intensity of the energy beam or the scan speed with which a spot of the energy beam, is guided over the build plane.

In other words, a relation can be established between the energy that is deployed into the build material arranged in the build plane and the defined beam path length. For example, the higher the intensity and/or the power of the energy beam or the amount of energy that can be depleted in the build material in a given time period, the longer the defined beam path length. In other words, lower intensities and/or lower powers of the energy beam may lead to more filigree structures than can be irradiated and therefore, the defined beam path length may be chosen shorter compared with the irradiation with higher power or higher intensity.

The defined beam path length may preferably be defined as 1mm or below 1mm. In general, the defined beam path length may be defined arbitrarily and adapted to parameters in the additive manufacturing process or of the build material that is used in the additive manufacturing process, as described before. However, it is advantageous to choose or define the defined beam path length below 1 mm.

Further, the defined beam path length may be defined dependent on an actual and/or nominal spot size of the energy beam. As already described before, the spot size defines the minimum length that can be irradiated via the energy beam. If, for example, a beam path length of a defined beam path matches or falls below a predefined beam path length, for example the actual and/or nominal spot size of the energy beam, it is advantageous to use the substitute beam path instead of the defined beam path. For example, if a comparatively smaller spot size is used defined beam paths with comparatively shorter beam path length can be irradiated in the build material, whereas if a comparatively larger spot size is used, only defined beam paths with comparatively larger beam path length, in particular larger than the spot size, can properly be irradiated.

The inventive method may further be improved in that the at least one energy beam may be guided along the substitute beam path, if the beam path lengths of a defined number of adjacent defined beam paths fall below the defined beam path length (threshold value, as described before), in particular more than two adjacent defined beam paths, preferably at least five adjacent defined beam paths. According to this embodiment, it is assured that using the substitute beam path or guiding the energy beam along the substitute beam path is advantageous, as the substitute beam path is comparatively longer than guiding the energy beam along the defined beam paths or at least one defined beam path. By ensuring that at least two adjacent defined beam paths are irradiated via guiding the energy beam along the substitute beam path, it is also ensured that the irradiation vector or the path along which the energy beam is guided, in particular the substitute beam path, does itself not fall below a defined path length.

At least one energy beam may further be guided along the substitute beam path or the at least two adjacent defined beam paths dependent on a distance between two adjacent defined beam paths. Thus, it can be controlled that the substitute beam path is used dependent on the distance of two adjacent defined beam paths the child be substituted by guiding the energy beam along the substitute beam path instead of guiding the energy beam along the two individual adjacent defined beam paths.

The at least two adjacent defined beam paths may be defined dependent on object data, in particular three-dimensional data of the object to be built. Thus, three-dimensional data of the object may be used, such as CAD data to define the geometry, in particular the three-dimensional shape of the object. Said data may be used to generate slice data that relate to the single layers of build material that are applied to form the object by additively irradiating said layers. Dependent on the shape of each of the layers or at least one region of each layer, an irradiation strategy may be defined, wherein the energy beam is guided along a defined beam path. For example, a control unit may be provided that receives or generates the object data, e.g. CAD data. The control unit may generate slice data from the CAD data and may define an irradiation strategy, in particular at least one defined beam path of the energy beam has to be guided along in each layer. Hence, as described before, the energy beam may be guided along the substitute beam path instead of being guided along the at least one defined beam path, inter alia, dependent on the beam path length of the at least one defined beam path.

Besides, the invention relates to an apparatus for additively manufacturing three-dimensional objects by means of successive layerwise selective irradiation and consolidation of layers of a build material which can be consolidated by means of at least one energy beam, wherein the energy beam can be guided along at least one beam path arranged in a build plane to irradiate build material, wherein an irradiation device is adapted to guide the at least one energy beam along the defined beam path or along a substitute beam path dependent on at least one parameter relating to a length of the at least on defined beam path and/or relating to a geometry of at least one layer of the object to be irradiated.

Besides, the invention relates to an irradiation device for an apparatus for additively manufacturing three-dimensional objects by means of successive layerwise selective irradiation and consolidation of layers of a build material which can be consolidated by means of at least one energy beam, wherein the energy beam can be guided along at least one beam path arranged in a build plane to irradiate build material, in particular an inventive apparatus, as described before, wherein the irradiation device is adapted to guide the at least one energy beam along the defined beam path or along a substitute beam path dependent on at least one parameter relating to a length of the at least one defined beam path and/or relating to a geometry of at least one region of at least one layer to be irradiated.

Self-evidently, all details, features and advantages described with respect to the inventive method are fully transferable to the inventive apparatus and the inventive irradiation device. In particular, the inventive method may be performed on the inventive apparatus, preferably using an inventive irradiation device.

Exemplary embodiments of the invention are described with reference to the Fig. The sole Fig. are schematic diagrams, wherein
- Fig. 1: shows an inventive apparatus; and
- Fig. 2: shows an irradiation pattern that is to be irradiated in an inventive apparatus, preferably using the inventive method.

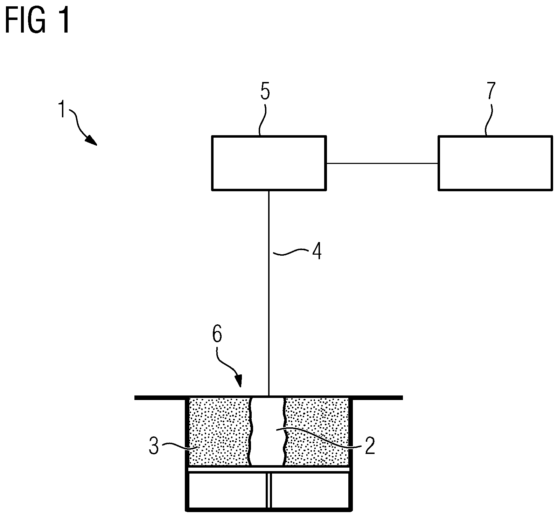

Fig. 1 shows an apparatus 1 for additively manufacturing three-dimensional objects 2 by means of successive layerwise selective irradiation and consolidation of layers of a build material 3 which can be consolidated by means of at least one energy beam 4, such as a laser beam or an electron beam. The energy beam 4 is guided via an irradiation device 5 in a build plane 6 to selectively irradiate the build material 3 and thereby generate the object 2.

Further a control unit 7 is provided which receives the object data of the object 2 to be built and therefore, generates slice data defining several layers of build material 3 that are arranged in the build plane 6, in particular that relate to the application of build material 3 in the build plane 6. Further the control unit 7 may generate irradiation data corresponding to an irradiation pattern the irradiation device 5 has to generate in the build plane 6 for each layer of build material 3. The irradiation data particularly comprise at least one defined beam path the energy beam 4 is guided along to irradiate the build material 3 corresponding to the irradiation pattern. The control unit 7 may also be deemed as part of the irradiation device 5.

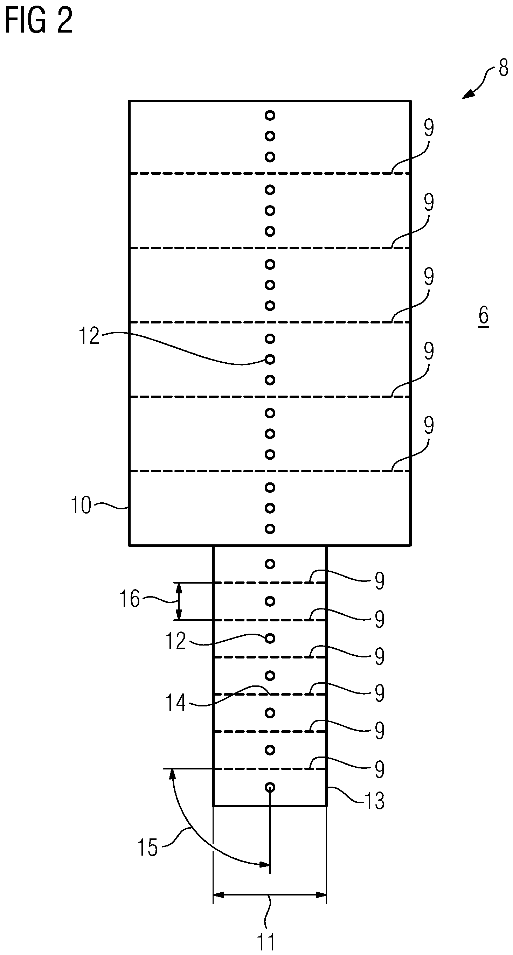

For example, an application unit (not shown) applies layer of build material 3 in the build plane 6. Corresponding to the irradiation data the irradiation device 5 guides the energy beam 4 a long a defined beam path 9 to irradiate the build material, as will be described with respect to Fig. 2 below.

Fig. 2 shows an irradiation pattern 8 comprising five defined beam paths 9 that are arranged in parallel (optional). By guiding the energy beam 4 along the energy beam paths 9, a respective region 10 of the build plane 6, in particular a part of a layer of an object 2, is irradiated and thereby consolidated. Fig. 2 further shows that a defined beam path length 11 may be defined, for example via the control unit 7 or stored in the control unit 7, wherein, if a beam path length of one of the energy beam paths 9, preferably at least two adjacent energy beam paths 9, falls below or matches the defined beam path length 11, a substitute beam path 12 can be used to guide the energy beam 4 along. As the defined beam paths 9 are longer than the defined beam path length 11, the energy beam 4 is guided along the energy beam paths 9 in the region 10.

Fig. 2 further shows another region 13 in which the beam path lengths of the defined beam paths 9 are below the defined beam path length 11. Thus, a substitute beam path 12 is defined and the region 13 is irradiated by guiding the energy beam 4 along the substitute beam path 12. Hence, the substitute beam path 12 assigned to the region 13 irradiates the region 13 the defined beam paths 9 are assigned to. Hence, the substitute beam path 12 is assigned and covers the same region 13 as the defined beam paths 9. The region 13 corresponds to, for example, a filigree section or a fine structure of the object 2 that is built in the additive manufacturing process.

The defined beam path length 11 can for example be defined dependent on a material parameter of the build material 3, in particular physical parameter and/or a chemical parameter of the build material 3. It is also possible to define the defined beam path length 11 dependent on a geometrical parameter, in particular a parameter of the object 2, for example defining the shape of the regions 10, 13. Hence, the control unit 7 may for example utilize an algorithm that is suitable for determining whether the respective region 10, 13 has to be irradiated by guiding the energy beam 4 along the defined beam paths 9 or along the substitute beam path 12.

Fig. 2 further shows that the substitute beam path 12 extends through the centers 14 of the defined beam paths 9, wherein the substitute beam path 12 and the defined beam paths 9 enclose an angle 15. It is also possible to control the energy beam 4, in particular guide the energy beam 4 along the defined beam paths 9 or along the substitute beam path 12 dependent on a distance 16 between at least two defined beam paths 9.

Of course, the inventive method may be performed on the inventive apparatus 1.

## Claims

1. Method for operating at least one apparatus (1) for additively manufacturing three-dimensional objects (2) by means of successive layerwise selective irradiation and consolidation of layers of a build material (3) which can be consolidated by means of at least one energy beam (4), wherein the energy beam (4) can be guided along at least one defined beam path (9) arranged in a build plane (6) to irradiate build material (3), **characterized in that** dependent on at least one parameter relating to a length of the at least one defined beam path (9) and/or relating to a geometry of at least one region (10, 13) of at least one layer to be irradiated, the energy beam (4) is guided along the defined beam path (9) or along a substitute beam path (12).

2. Method according to one of the preceding claims, **characterized in that** dependent on a beam path length of at least two adjacent defined beam paths (9) the at least one energy beam (4) is guided along the at least two adjacent defined beam paths (9) or the energy beam (4) is guided along a substitute beam path (12), wherein the at least two adjacent defined beam paths (9) and the substitute beam path (12) are assigned to the same region (10, 13) of the build plane (6).

3. Method according to one of the preceding claims, **characterized in that** the energy beam (4) is guided along the substitute beam path (12), if the beam path lengths of the at least two adjacent defined beam paths (9) falls below or matches a defined beam path length (11).

4. Method according to one of the preceding claims, **characterized in that** the substitute beam path (12) extends through a defined point, in particular the center (14), of the at least two adjacent defined beam paths (9).

5. Method according to one of the preceding claims, **characterized in that** the substitute beam path (12) connects the centers (14) of the at least two, in particular of multiple, adjacent defined beam paths (9).

6. Method according to one of the preceding claims, **characterized in that** the at least two adjacent defined beam paths (9) are at least partially arranged in parallel.

7. Method according to one of the preceding claims, **characterized in that** at least one defined beam path (9) and the substitute beam path (12) enclose a defined angle (15).

8. Method according to one of the preceding claims, **characterized in that** the defined beam path length (11) is defined dependent on a physical and/or chemical parameter of the build material (3) and/or an object parameter of the object (2) to be built.

9. Method according to one of the preceding claims, **characterized in that** the defined beam path length (11) is defined dependent on at least one process parameter relating to the manufacturing process, in particular relating to the irradiation of build material, preferably the power and/or the intensity of the energy source and/or a scan speed of the energy source and/or the spot size of the energy source.

10. Method according to one of the preceding claims, **characterized in that** the defined beam path length (11) is defined as 1mm or below 1mm.

11. Method according to one of the preceding claims, **characterized in that** the defined beam path length (11) is defined dependent on an actual and/or nominal spot size of the energy beam (4).

12. Method according to one of the preceding claims, **characterized in that** the at least one energy beam (4) is guided along the substitute beam path (12), if the beam path lengths of a defined number of adjacent defined beam paths (9) fall below the defined beam path length (11), in particular more than two adjacent defined beam paths (9), preferably at least five adjacent defined beam paths (9).

13. Method according to one of the preceding claims, **characterized in that** the at least one energy beam (4) is guided along the substitute beam path (12) or the at least two adjacent defined beam paths (9) dependent on a distance (16) between two adjacent defined beam paths (9).

14. Method according to one of the preceding claims, **characterized in that** the at least two adjacent defined beam paths (9) are defined dependent on object data, in particular three-dimensional data of the object.

15. Apparatus (1) for additively manufacturing three-dimensional objects (2) by means of successive layerwise selective irradiation and consolidation of layers of a build material (3) which can be consolidated by means of at least one energy beam (4), wherein the energy beam (4) can be guided along at least one beam path arranged in a build plane (6) to irradiate build material (3), **characterized in that** an irradiation device is adapted to guide the at least one energy beam (4) along the defined beam path (9) or along a substitute beam path (12) dependent on at least one parameter relating to a length of the at least one defined beam path (9) and/or relating to a geometry of at least one region (10, 13) of at least one layer to be irradiated.

## Amended claims

### Amended claims in accordance with Rule 137(2) EPC.

1. Method for operating at least one apparatus (1) for additively manufacturing three-dimensional objects (2) by means of successive layerwise selective irradiation and consolidation of layers of a build material (3) which can be consolidated by means of at least one energy beam (4), wherein the energy beam (4) can be guided along at least one defined beam path (9) arranged in a build plane (6) to irradiate build material (3), **characterized in that** dependent on at least one parameter relating to a length of the at least one defined beam path (9) and/or relating to a geometry of at least one region (10, 13) of at least one layer to be irradiated, the energy beam (4) is guided along the defined beam path (9) or along a substitute beam path (12).

2. Method according to one of the preceding claims, **characterized in that** dependent on a beam path length of at least two adjacent defined beam paths (9) the at least one energy beam (4) is guided along the at least two adjacent defined beam paths (9) or the energy beam (4) is guided along a substitute beam path (12), wherein the at least two adjacent defined beam paths (9) and the substitute beam path (12) are assigned to the same region (10, 13) of the build plane (6).

3. Method according to one of the preceding claims, **characterized in that** the energy beam (4) is guided along the substitute beam path (12), if the beam path lengths of at least two adjacent defined beam paths (9) falls below or matches a defined beam path length (11).

4. Method according to one of the preceding claims, **characterized in that** the substitute beam path (12) extends through a defined point, in particular the center (14), of at least two adjacent defined beam paths (9).

5. Method according to one of the preceding claims, **characterized in that** the substitute beam path (12) connects the centers (14) of at least two, in particular of multiple, adjacent defined beam paths (9).

6. Method according to one of the preceding claims, **characterized in that** at least two adjacent defined beam paths (9) are at least partially arranged in parallel.

7. Method according to one of the preceding claims, **characterized in that** at least one defined beam path (9) and the substitute beam path (12) enclose a defined angle (15).

8. Method according to one of the preceding claims, **characterized in that** adefined beam path length (11) is defined dependent on a physical and/or chemical parameter of the build material (3) and/or an object parameter of the object (2) to be built.

9. Method according to one of the preceding claims, **characterized in that** a defined beam path length (11) is defined dependent on at least one process parameter relating to the manufacturing process, in particular relating to the irradiation of build material, preferably the power and/or the intensity of the energy source and/or a scan speed of the energy source and/or the spot size of the energy source.

10. Method according to one of the preceding claims, **characterized in that** a defined beam path length (11) is defined as 1mm or below 1mm.

11. Method according to one of the preceding claims, **characterized in that** a defined beam path length (11) is defined dependent on an actual and/or nominal spot size of the energy beam (4).

12. Method according to one of the preceding claims, **characterized in that** the at least one energy beam (4) is guided along the substitute beam path (12), if the beam path lengths of a defined number of adjacent defined beam paths (9) fall below the defined beam path length (11), in particular more than two adjacent defined beam paths (9), preferably at least five adjacent defined beam paths (9).

13. Method according to one of the preceding claims, **characterized in that** the at least one energy beam (4) is guided along the substitute beam path (12) or at least two adjacent defined beam paths (9) dependent on a distance (16) between two adjacent defined beam paths (9).

14. Method according to one of the preceding claims, **characterized in that** at least two adjacent defined beam paths (9) are defined dependent on object data, in particular three-dimensional data of the object.

15. Apparatus (1) for additively manufacturing three-dimensional objects (2) by means of successive layerwise selective irradiation and consolidation of layers of a build material (3) which can be consolidated by means of at least one energy beam (4), wherein the energy beam (4) can be guided along at least one beam path arranged in a build plane (6) to irradiate build material (3), **characterized in that** an irradiation device is adapted to guide the at least one energy beam (4) along the defined beam path (9) or along a substitute beam path (12) dependent on at least one parameter relating to a length of the at least one defined beam path (9) and/or relating to a geometry of at least one region (10, 13) of at least one layer to be irradiated.
